# EUROPÄISCHE PATENTSCHRIFT

(11) **EP 3 595 926 B1**
(45) Veröffentlichungstag und Bekanntmachung des Hinweises auf die Patenterteilung: **11.11.2026**
(21) Anmeldenummer: 18712848.3
(22) Anmeldetag: 16.03.2018
(51) Int. Cl.: B60L 50/30, B60L 53/53, B60L 55/00, B60L 53/55, B60M 3/00

(54) **VORRICHTUNG ZUR ENERGIEVERSORGUNG EINES ELEKTRISCHEN BETRIEBSNETZES UND VON WEITEREN VERBRAUCHERN AUS EINEM BATTERIEGESTÜTZEN UNTERWERK**
DEVICE FOR SUPPLYING ENERGY TO AN ELECTRIC OPERATING GRID
DISPOSITIF SERVANT À ALIMENTER EN ÉNERGIE UN RÉSEAU DE SERVICE ÉLECTRIQUE

(30) Priorität: 16.03.2017 DE 102017105728
(43) Veröffentlichungstag der Anmeldung: 22.01.2020
(60) Teilanmeldung: 26209860.1
(73) Patentinhaber: Fraunhofer-Gesellschaft zur Förderung der angewandten Forschung e.V., 80686 München (DE)
(72) Erfinder: KLAUSNER, Sven, 01099 Dresden (DE); JEHLE, Claudius, 01159 Dresden (DE)
(74) Vertreter: Pfenning, Meinig & Partner mbB
(86) Internationale Anmeldenummer: PCT/EP2018/056711
(87) Internationale Veröffentlichungsnummer: WO 2018/167286

(56) Entgegenhaltungen:
- WO-A1-2010/023033
- JP-A- 2002 002 334
- MÜLLER-HELLMANN ADOLF ET AL: "Mitbenutzung von Gleichspannungsanlagen des ÖPNV zur DC-Ladung von Batteriefahrzeugen", INTERNATIONALER ETG-KONGRESS 2013 - ENERGIEVERSORGUNG AUF DEM WEG NACH 2050 - SYMPOSIUM 1: SECURITY IN CRITICAL INFRASTRUCTURES TODAY; 11/05/2013 - 11/06/2013 AT BERLIN, DEUTSCHLAND IN: ETG-FACHBERICHT BAND, VDE VERLAG, DE, vol. 139, 5 November 2013 (2013-11-05), pages 1 - 7, XP008177660, ISBN: 978-3-8007-3550-1

## Beschreibung

Die Erfindung liegt auf dem Gebiet der Elektrotechnik, der Energietechnik und der Steuer- und Regeltechnik und ist mit besonderem Vorteil bei Energieversorgungsnetzen einsetzbar. Vorteile bieten sich auch bei der Anwendung zur Versorgung von städtischen Bahnnetzen.

In zunehmendem Maß stellt sich beim Betrieb von Energienetzen die Aufgabe, einerseits alternative Energiequellen auf der Versorgungsseite einzubeziehen und andererseits einen effizienten, energiesparenden Betrieb sowohl auf der Nutzerseite als auch auf der Seite des Versorgungsnetzes zu gewährleisten.

Zu diesem Zweck werden bereits in verschiedenen Konstellationen Energiespeichereinrichtungen zur Speicherung von Energie eingesetzt mit dem Ziel, diese Energie kurz- oder mittelfristig zur Vermeidung von Lastspitzen mit in ein Betriebsnetz einzuspeisen.

Aus der Offenlegungsschrift WO 2010/023033 A1 ist beispielsweise ein Unterwerk zur Versorgung eines Bahnnetzes bekannt, das eine Energiespeichereinheit aufweist und durch ein Versorgungsnetz mit Energie versorgt wird. In die Energiespeichereinheit kann einerseits überschüssige Energie aus dem Versorgungsnetz zur Zwischenspeicherung eingeleitet werden mit dem Ziel, bei einem hohen Energiebedarf im Unterwerk eine Reserve an elektrischer Energie bereitzuhalten. Andererseits kann die Energiespeichereinheit auch rückgespeiste Energie, die in Schienenfahrzeugen im generatorischen Betrieb beim Bremsen erzeugt wird, zur weiteren Verwendung und zur Steigerung der Effizienz aufnehmen.

Bei der Organisation des innerstädtischen Nahverkehrs unter Einschluss elektrisch betriebener Nahverkehrsmittel beschränkt sich die Planung in der Gegenwart und Zukunft nicht auf die Versorgung solcher Nahverkehrsmittel mit kontinuierlichem Energiebezug, sondern es werden zunehmend auch Lösungen dafür gesucht, Elemente als Zusatznutzer zu versorgen, die im Wesentlichen mit elektrischen Energiespeichern betrieben werden. Dies können beispielsweise batteriebetriebene Fahrzeuge, insbesondere batteriebetriebene Busse, jedoch auch andere Fahrzeuge wie beispielsweise batteriebetriebene Mietfahrzeuge sein. Auch die entsprechenden Ladestationen können solche Zusatznutzer sein.

Die vorliegende Erfindung stellt sich vor dem Hintergrund des Standes der Technik die Aufgabe, eine Vorrichtung zur Energieversorgung eines elektrischen Betriebsnetzes zu schaffen, die außer der Versorgung von Nahverkehrsmitteln mit kontinuierlichem Energiebezug auch die Versorgung weiterer Nutzer in effizienter Weise ermöglicht.

Die Aufgabe wird mit den Merkmalen der Erfindung gemäß Patentanspruch 1 gelöst.

Die Patentansprüche 2 - 13 beziehen sich auf vorteilhafte Ausgestaltungen.

Die Erfindung bezieht sich somit auf eine Vorrichtung zur Energieversorgung eines elektrischen Betriebsnetzes für elektrisch betriebene Nahverkehrsmittel mit kontinuierlichem Energiebezug, mit einem Unterwerk, das folgende Elemente aufweist:
einen Gleichspannungskreis, welcher mit einem Versorgungsnetz mittels eines ersten Wechselrichters verbunden ist,
eine erste, durch den Gleichspannungskreis gebildete oder mit diesem verbundene Speiseeinrichtung für das Betriebsnetz und
eine Energiespeichereinrichtung, die mit dem Gleichspannungskreis durch eine bidirektionale Koppeleinrichtung verbunden ist, wobei die Energiespeichereinrichtung eine Kapazität von wenigstens 30 kWh, insbesondere wenigstens 50 kWh, weiter insbesondere 100 kWh aufweist.

Das Unterwerk wird durch ein Versorgungsnetz gespeist, mit dem es über den ersten Wechselrichter verbunden ist. Das Versorgungsnetz wird üblicherweise ein Wechselspannungsnetz sein, das beispielsweise eine Betriebsspannung auf Mittelspannungsniveau oder Hochspannungsniveau bis zu einigen hundert Kilovolt haben kann.

Durch das Unterwerk wird mittels der ersten Speiseeinrichtung das Betriebsnetz, beispielsweise ein Bahnnetz in einer Stadt oder Region, betrieben. Die erste Speiseeinrichtung kann dabei die elektrische Energie, die im Gleichspannungskreis des Unterwerks zur Verfügung steht, geeignet wandeln, d. h. eine geeignete Spannung und im Falle eines Wechselstroms eine geeignete Frequenz und/oder Phase einstellen. Die so bereitgestellte elektrische Energie wird in ein elektrisches Leitungsnetz, das Betriebsnetz, eingespeist, das weitläufig sein kann. In diesem Netz können sich beispielsweise elektrische schienengebundene Bahnen bewegen, die dauerhaft elektrische Energie für ihren Antrieb und andere Zwecke abnehmen.

Die erste Speiseeinrichtung kann auch unmittelbar durch den Anschluss des Betriebsnetzes an den Gleichspannungskreis oder den Anschluss des Betriebsnetzes an den ersten Wechselrichter gebildet sein, oder durch den betriebsnetzseitigen Teil des ersten Wechselrichters oder durch den Wechselrichter selbst.

Durch die zur Verfügung gestellte Kapazität der Energiespeichereinrichtung kann das Unterwerk netzdienlich eingesetzt werden. Die Abnahme von Energie aus dem Versorgungsnetz kann sehr flexibel gesteuert werden, da die Energiemenge in der Energiespeichereinrichtung für einen Betrieb über eine Zeitspanne in der Größenordnung von Minuten ausreicht, so dass Spitzenbelastungen des Versorgungsnetzes vermieden werden können. Auf diese Weise unterscheidet sich die erfindungsgemäße Vorrichtung von solchen Vorrichtungen, bei denen Energiespeicher ausschließlich zur Speicherung von aus dem Betriebsnetz, beispielsweise durch generatorischen Betrieb von Traktionsantrieben, rückgewonnener Energie geeignet und bemessen sind.

An den Gleichspannungskreis können zudem weitere (= zweite) Speiseeinrichtungen zur Versorgung von Zusatznutzern, insbesondere Ladestationen angekoppelt sein. Für diese Zusatznutzer werden gesonderte Speiseeinrichtungen verwendet, um diese in gewissem Maße von dem Betriebsnetz abzukoppeln. Solche Zusatznutzer sind typischerweise Nutzer, die nur zeitweise elektrische Energie nutzen und abnehmen. Auch können für die Zusatznutzer ein anderes Spannungsniveau und andere Erdungsbedingungen bzw. Isolationsbedingungen vorliegen und gefordert sein als für das Betriebsnetz.

Aus diesem Grund können die zweiten Speiseeinrichtungen galvanisch trennend ausgebildet und zur Regelung einer Ausgangsspannung oder eines Ausgangsstroms auf der Seite der Zusatznutzer eingerichtet sein. Beispielsweise kann eine zweite Speiseeinrichtung ein DC/DC-Wandler sein, der derart ausgestaltet ist, dass durch ihn eine Potentialtrennung verwirklicht ist. Dabei kann die Ausgangsspannung beispielsweise im Bereich der Betriebsspannung des Betriebsnetzes eingestellt und gegebenenfalls auch geregelt werden.

Damit können die Anforderungen zum elektrischen Laden von batteriebetriebenen Fahrzeugen, beispielsweise Bussen, erfüllt werden, die ein bestimmtes Spannungsniveau zum Laden und eine Spannungs- oder Stromregelung erfordern.

Zudem können technische Maßnahmen ergriffen werden, Erdungsverhältnisse (z. B. bei Elektrobussen ist durch Gummibereifung ein hoher elektrischer Widerstand zur Erde gegeben) zu realisieren, die für die Versorgung von zu ladenden Verbrauchern erforderlich sind. Insbesondere kann es bei Zusatznutzern, deren offenliegende, einfach berührbare Flächen (bspw. Karosserie, Chassis, Haltestangen) nicht niederohmig leitend mit der Erde verbunden sind (bspw. weil der Bodenkontakt über hochohmige Gummibereifung realisiert ist) und/oder bei welchen jene Komponenten nicht besonders sicher gegen Isolationsfehler verbauter elektrischer Komponenten geschützt sind (bspw. durch doppelt oder mehrfach ausgeführte Isolation), nötig sein, eine isolationsfehler-tolerante Netztopologie aufzubauen (bspw. ein IT-Netz).

Aufgrund der vorgesehenen Energiespeichereinrichtung können einerseits durch den Generatorbetrieb von Traktionsmotoren im Betriebsnetz erzeugte Energiebeträge zurückgespeist und gespeichert werden, um die Gesamteffizienz im Betrieb zu optimieren. Andererseits ist die Energiespeichereinrichtung in der Lage, überschüssige Energie aus dem Versorgungsnetz, die dieses bei suboptimaler Auslastung anbietet, zu speichern und im Falle hohen Bedarfs des Betriebsnetzes in dieses mit einzuspeisen. Dabei kann für die Aufladung der Energiespeichereinrichtung aus dem Versorgungsnetz eine Steuerung vorgesehen sein, die Preisschwankungen am Strommarkt berücksichtigt und unter Berücksichtigung von Verbrauchsprognosen bei günstigen Preisen überschüssige Energien aus dem Versorgungsnetz aufkauft und diese in der Energiespeichereinrichtung speichert. Dadurch wird der Betrieb des Betriebsnetzes optimiert.

Aufgrund der vorgesehenen Energiespeichereinrichtung kann insbesondere die zeitliche Abfolge des Energiebezuges aus dem Versorgungsnetz vorteilhaft gestaltet werden. Ohne eine solche Energiespeichereinrichtung sind sämtliche Bedarfe im Betriebsnetz und/oder der Zusatznutzer unmittelbar und unverzögert aus dem Versorgungsnetz zu entnehmen, was zu einem unsteten und ungleichmäßigen Energiebezug aus dem Versorgungsnetz führt. Sämtliche versorgungsnetzseitigen Einrichtungen (bspw. Leitungsquerschnitte, Leistungselektronik in den Mittelspannungsumspannwerken) werden vom Versorgungsnetzbetreiber auf diesen unsteten, von teilweise sehr hohen Lastspitzen durchsetzten, Betriebsfall ausgelegt, was wirtschaftlich auf den Abnehmer umgelegt werden kann und wird. Durch eine Energiespeichereinrichtung kann nun durch deren vorteilhaft gestaltete Be- und Entladung eine Verstetigung des Energiebezuges herbeigeführt werden (Spitzenkappung).

Gespeicherte Energie kann letztlich auch für die Zusatznutzer vorgehalten werden, für die eine Verbrauchsprognose üblicherweise schwieriger ist als für das Betriebsnetz, in dem Nahverkehrsmittel eher einem geregelten Betrieb folgen.

Die Erfahrung hat gezeigt, dass allein durch das Ermöglichen der Speisung von Energie aus dem Betriebsnetz in die Energiespeichereinrichtung Effizienzgewinne von mehr als 10 % im Betrieb realisierbar sind. Zusätzlich hierzu ermöglicht der Energiespeicher, auch bei erhöhtem Energiebedarf im Betriebsnetz oder bei den Zusatznutzern auf das Abnehmen von Energie aus dem Versorgungsnetz während Hochpreisphasen oder Hochlastphasen zu verzichten, sofern gespeicherte Energie in der Energiespeichereinrichtung zur Verfügung steht.

Letztlich kann die Versorgung der Zusatznutzer mit geringem strukturellen und Kostenaufwand geleistet werden, da viele Elemente des Unterwerks und des Betriebsnetzes für die Versorgung der Zusatznutzer mitverwendet werden können.

Hierdurch ist eine Entlastung des innerstädtischen Verkehrs durch erhöhten Einsatz von Elektrofahrzeugen, beispielsweise Elektrobussen, erreichbar.

Für das Laden von Verbrauchern, beispielsweise batteriebetriebenen Elektrobussen, sind verschiedene Konzepte denkbar, die auch gemischt realisierbar sind:
Erstens kann an Linienendpunkten der Busse jeweils eine Schnellladung über wenige Minuten mit einer Leistung von typischerweise 250 kW die notwendige Energie für einen nachfolgenden Linienumlauf bereitstellen.

Zweitens kann durch sogenannte Pulsladungen oder Gelegenheitsladungen an Haltestellen jeweils ein Energiebetrag geladen werden, um dadurch den Ladezeitbedarf an den Linienendpunkten zu minimieren. Typische Haltezeiten liegen dabei bei etwa 15 Sekunden, so dass Nachladeleistungen im Bereich von 700 kW während dieser kurzen Zeitspannen denkbar sind.

Drittens sind Aufladevorgänge über längere Standzeiten, beispielsweise als Nachtladung oder Depotladung denkbar, die mit wesentlich geringeren Ladeleistungen realisierbar sind.

Maximale Betriebsspannungen und auch Ladespannungen von Zusatznutzern, wie bspw. Batteriebussen, können sich teilweise wesentlich von der Betriebsspannung von Betriebsnetzen für Stadtbahnen und Oberleitungsbusse unterscheiden, so dass die Ladespannung, wenn sie aus einem üblichen Unterwerk beliefert wird, entsprechend eingestellt und geregelt werden muss. Dies wird durch die erfindungsgemäßen zweiten Speiseeinrichtungen gewährleistet, von denen mehrere vorgesehen sein und für unterschiedliche Isolationscharakteristiken oder Ströme/Spannungen eingerichtet sein können.

Eine vorteilhafte Ausgestaltung sieht dabei vor, dass die zweiten Speiseeinrichtungen isolierte Gleichspannungswandler oder Wechselrichter mit Trenntransformatoren und Diodengleichrichtern oder Wechselrichter mit Trenntransformatoren und geregelten Gleichrichtern aufweisen.

Diese Ausführungsformen können sicherstellen, dass die nutzerseitigen Verhältnisse an jeder zweiten Speiseeinrichtung an die geforderten Spannungs- und Isolationsbedingungen der Zusatznutzer anpassbar sind. Hierzu wird durch den isolierten Aufbau die erforderliche Entkopplung sichergestellt.

Das Unterwerk kann grundsätzlich derart gestaltet sein, dass der erste Wechselrichter für einen bidirektionalen Betrieb eingerichtet ist. In diesem Fall kann nicht nur Energie von dem Unterwerk aus dem Versorgungsnetz bezogen werden, sondern es kann auch Energie von dem Unterwerk in das Versorgungsnetz rückgespeist werden. Damit ist ein netzdienlicher Betrieb des Unterwerks bzw. aller mit dem Unterwerk verbundener Einrichtungen ermöglicht.

Es kann also einerseits Energie aus dem Betriebsnetz, beispielsweise durch generativ gewonnene Bremsenergie, ganz oder teilweise zur Aufladung der Energiespeichereinrichtung im Unterwerk verwendet, jedoch auch direkt über den ersten Wechselrichter in das Versorgungsnetz zurückgespeist werden.

Zudem ist es auch möglich, gezielt von der Energiespeichereinrichtung elektrische Energie in das Versorgungsnetz zu geeigneten Zeitpunkten rückzuspeisen. Dies ermöglicht einen auch in finanzieller Hinsicht optimierten Betrieb der Energiespeichereinrichtung, in die zu Zeiten geringer Energiepreise Energie aus dem Versorgungsnetz eingespeist werden kann, die dann sowohl zur Vermeidung von Lastspitzen im Versorgungsnetz, als auch zur Erzielung eines vorteilhaften Energiepreises in das Versorgungsnetz rückgespeist werden kann. Hierbei wird durch eine entsprechende Steuerung berücksichtigt, ob in naher Zukunft Energie aus der Energiespeichereinrichtung für das Betriebsnetz und/oder Zusatznutzer benötigt wird.

Eine weitere Ausgestaltung kann vorsehen, dass die bidirektionale Koppeleinrichtung, mit der die Energiespeichereinrichtung mit dem Gleichspannungskreis des Unterwerks verbunden ist, eine Leistungselektronikeinrichtung, insbesondere einen Gleichspannungswandler, aufweist. Eine solche Ausgestaltung ist für einen optimierten Betrieb der Energiespeichereinrichtung insbesondere dann, wenn sie als elektrochemische Speichereinrichtung oder eine elektrostatische Speichereinrichtung ausgestaltet ist, sinnvoll.

Es kann zudem vorgesehen sein, dass die Energiespeichereinrichtung einen elektrochemischen und/oder einen mechanischen und/oder einen elektrostatischen Energiespeicher aufweist.

Auch eine Kombination aus zwei oder drei der genannten Speicherarten ist denkbar, um einerseits eine optimierte Energiedichte in der Speicherung und andererseits eine optimierte Leistungsdichte bei der Entladung zu ermöglichen.

Die Zusammensetzung der Speicherarten kann auch die Häufigkeit und Amplitude der Ladungen und Entladungen der Energiespeichereinrichtung berücksichtigen.

Zudem kann vorteilhaft vorgesehen sein, dass das Betriebsnetz ein Gleichspannungs-Betriebsnetz ist. Dies ist insbesondere bei der Verwendung von Unterwerken für Stadtbahnen häufig der Fall, jedoch soll auch der Fall, dass das Betriebsnetz ein Wechselspannungsnetz ist, durch die Erfindung grundsätzlich umfasst werden.

Es kann zudem in einer vorteilhaften Ausgestaltung vorgesehen sein, dass der erste Wechselrichter dazu eingerichtet ist, einen vom Unterwerk in das Versorgungsnetz rückgespeisten Strom über eine erste Zuleitung zum Versorgungsnetz zu leiten, und dass eine erste elektrische Leitung des Betriebsnetzes mit dem Versorgungsnetz derart verbunden ist, dass sie eine Rückleitung für den rückgespeisten Strom zum Unterwerk bildet. Diese Ausführungsform bezieht sich auf die Gestaltung und Verbindung von Versorgungsnetz und Betriebsnetz und insbesondere auf die Leitungsführung, die auf diese Weise optimiert sein kann.

Es kann zudem vorgesehen sein, dass der erste Wechselrichter dazu eingerichtet ist, einen vom Unterwerk in das Versorgungsnetz rückgespeisten Strom über eine erste Zuleitung zum Versorgungsnetz zu leiten, und dass eine Rückspeiseleistung aus der Energiespeichereinrichtung entnehmbar ist. Auch diese Variante lässt eine effiziente Nutzung von Leitungen zu.

Die Erfindung bezieht sich zudem auf eine Ausgestaltung, bei der eine Steuereinrichtung des Unterwerks mit wenigstens einer Sensoreinrichtung verbunden ist, die die Spannung und/oder Frequenz und/oder Phasenlage des Versorgungsnetzes erfasst.

Die Steuereinrichtung kann innerhalb des Unterwerks wenigstens mit dem ersten Wechselrichter verbunden sein, um diesen zu steuern und somit die Leistungsaufnahme aus dem sowie die Rückspeisung ins Versorgungsnetz zu ermöglichen.

Das Verhältnis des Energieinhalts der Energiespeichereinrichtung zur Anschlussleistung des Unterwerks kann mindestens 1h/5 betragen, wie nachfolgend noch genauer ausgeführt wird.

Die maximale Kapazität des Energiespeichers kann so ausgestaltet sein, dass mindestens die 2-fache Energiemenge aufgenommen werden kann, welche durchschnittlich stündlich an die Zusatznutzer abgegeben wird.

Eine Steuereinrichtung des Unterwerks kann weiterhin mit wenigstens einer Sensoreinrichtung verbunden sein, die mindestens einen Betriebszustand des Versorgungsnetzes erfasst. Damit kann in vorteilhafter Weise eine Havarie des Versorgungsnetzes, zum Beispiel ein Stromausfall erkannt werden. In einem solchen Fall kann die Versorgung der Verbraucher des Unterwerkes zweckdienlich der Havariesituation angepasst werden.

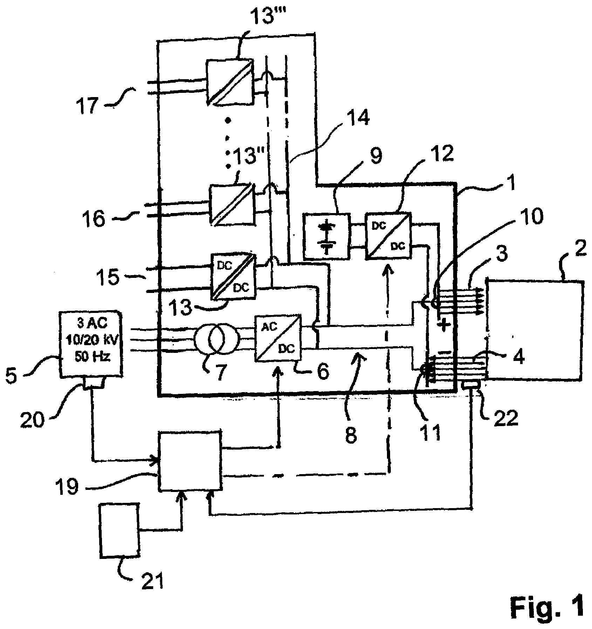

Das Unterwerk kann weiterhin eine Vorrichtung aufweisen, die mit dem Gleichspannungskreis (s. Fig. 1 Ziffer 8) verbunden und die ausgebildet ist, Niederspannungsverbraucher des Unterwerks mit Energie zu versorgen. Damit kann in vorteilhafter Weise bei einer Havarie des Versorgungsnetzes, zum Beispiel einem Stromausfall, die Energieversorgung des Unterwerks aus dem Batteriespeicher gewährleistet werden.

Die Erfindung bezieht sich nicht nur auf eine Vorrichtung der oben beschriebenen und erläuterten Art, sondern auch auf ein Verfahren zum Betrieb einer solchen Vorrichtung, bei dem die vom Unterwerk in das Versorgungsnetz rückgespeiste oder aus dem Versorgungsnetz entnommene Leistung in Abhängigkeit von der Wechselspannungsfrequenz des Versorgungsnetzes geregelt wird. Auf diese Weise ist eine stabilitätsstützende Wirkung vom Unterwerk auf das Versorgungsnetz ermöglicht. Die rückgespeiste Energie kann dabei entweder aus dem Betriebsnetz und dort insbesondere von der generativen Energieerzeugung beim Bremsen von Nahverkehrsmitteln erzeugt sein und/oder aus der Energiespeichereinrichtung stammen. Die entnommene Energie kann dabei entweder direkt den Nutzern zugeführt und/oder in der Energiespeichereinrichtung Aufnahme finden.

Für dieses Verfahren ist eine Sensorik zur Ermittlung von Spannung, Phase und Frequenz des Versorgungsnetzes sinnvoll, die als Betriebsgrößen dem ersten Wechselrichter und seiner Steuerung zugeführt werden, damit dieser die Leistung aus dem Unterwerk phasenrichtig und mit der richtigen Frequenz und Spannung in das Versorgungsnetz einspeisen beziehungsweise Leistung aus dem Versorgungsnetz in Abhängigkeit von dessen Frequenz in das Unterwerk übertragen kann.

Es kann auch ein Verfahren vorgesehen sein, bei dem unter Berücksichtigung eines vorhersagbaren Energiebedarfs des Betriebsnetzes aufgrund von Fahrplänen der Nahverkehrsmittel und/oder Positionen der Nahverkehrsmittel und unter Berücksichtigung der in der Energiespeichereinrichtung gespeicherten Energiemenge und der Möglichkeit der Energieentnahme aus der Energiespeichereinrichtung eine optimale Steuerung des Anteils des Leistungsflusses aus der Energiespeichereinrichtung in das Betriebsnetz bestimmt wird.

Dadurch kann jeweils auch in Abhängigkeit von der momentanen Belastung des Versorgungsnetzes ein optimierter Anteil des Gesamt-Leistungsflusses aus der Energiespeichereinrichtung bestritten werden und bei Belastungsspitzen des Versorgungsnetzes die aus diesem entnommene Leistung gesenkt werden.

Die Koppeleinrichtung, die die Energiespeichereinrichtung mit dem Gleichspannungskreis verbindet, kann dann geeignet angesteuert werden. Diese Ansteuerung kann auch mit einer abgestimmten Steuerung des ersten Wechselrichters verbunden werden, der beispielsweise den Energiebezug aus dem Versorgungsnetz senken kann.

Es kann zudem ein Verfahren vorgesehen sein, bei dem unter Berücksichtigung eines voraussagbaren Energiebedarfs aufgrund von Fahrplänen der Nahverkehrsmittel und/oder Verbrauchsplänen des Versorgungsnetzes und unter Berücksichtigung der in der Energiespeichereinrichtung gespeicherten Energiemenge ein optimierter Zeitraum für die Aufnahme von Energie aus dem Versorgungsnetz und für die Rückspeisung von Energie in das Versorgungsnetz bestimmt wird, wobei insbesondere bei der Ermittlung des optimierten Zeitraums für die Rückspeisung von Energie in das Versorgungsnetz oder für die Speisung von Energie aus der Energiespeichereinrichtung in das Betriebsnetz das Kriterium eines netzdienlichen, insbesondere frequenz- und/oder spannnungs- und/oder phasenstabilisierenden Verhaltens berücksichtigt, insbesondere am stärksten berücksichtigt werden kann.

Dabei kann zudem vorgesehen sein, dass bei der Ermittlung des optimierten Zeitraums für die Rückspeisung von Energie in das Versorgungsnetz oder für die Speisung von Energie aus der Energiespeichereinrichtung in das Betriebsnetz der zeitabhängige Energiepreis im Versorgungsnetz oder Prognosen des Energiepreises im Versorgungsnetz berücksichtigt werden.

So kann aufgrund der Fahrpläne und bekannter Standorte von Nahverkehrsmitteln prognostiziert werden, wie groß der Energiebedarf und wie groß zurückgespeiste Energiemengen durch Bremsvorgänge der einzelnen Nahverkehrsmittel in der nahen Zukunft sein werden. Dies ist beispielsweise dadurch möglich, dass Steigungs- und Gefällefahrten der einzelnen Nahverkehrsmittel aufgrund ihrer Standorte vorhersagbar sind. Solche Prognosen sind allerdings auch aufgrund einfacher Ähnlichkeitsbetrachtungen und statistischer Analysen beim Vergleich mit früheren Abläufen an beispielsweise gleichen Wochentagen ermittelbar. Außerdem können Rahmenbedingungen mit Parametern wie der Außentemperatur, der Luft- und Bodenfeuchtigkeit berücksichtigt werden und auch Wettervorhersagen eingearbeitet werden, soweit sie einen Einfluss auf Energiebedarfe haben.

Die Erfindung bezieht sich zudem auf ein System mit wenigstens zwei Vorrichtungen der oben beschriebenen Art, bei dem wenigstens zwei Unterwerke mit verschiedenen, voneinander beabstandeten, miteinander trennbar oder dauerhaft verbundenen Anschlusspunkten des Betriebsnetzes verbunden sind, wobei die Regelungen der jeweiligen Ausgangsspannungen an den jeweiligen ersten Speiseeinrichtungen für das Betriebsnetz mittels einer übergeordneten Steuereinrichtung aufeinander abstimmbar sind, um die Lastflüsse aus den Unterwerken zu den Nahverkehrsmitteln vorteilhaft zu steuern.

Dieser Ausgestaltung liegt die Erkenntnis zugrunde, dass die Steuerung von Lastflüssen in dem Betriebsnetz durch die geeignete Gestaltung der gleichzeitigen oder alternativen Einspeisungen an verschiedenen Stellen (Anschlusspunkten) optimiert werden kann und dass hierdurch elektrische Widerstände, die zur Versorgung eines Verbrauchers im Netz zu überwinden sind, sowie Belastungen einzelner Leiterabschnitte im Netz optimiert werden können. Dies geschieht durch die Gestaltung von Einspeisespannungen der verschiedenen Unterwerke in das Betriebsnetz, beispielsweise wenn das Betriebsnetz ein Gleichspannungsbetriebsnetz ist. Im Falle eines Wechselspannungsbetriebsnetzes können die Einspeiseeinrichtungen auch bezüglich der Phasenlage von Strom und Spannung derart gesteuert werden, dass die Lastflüsse zu den Verbrauchern optimiert werden.

Es kann zudem ein Verfahren vorgesehen sein, bei dem bei Erkennung eines Ausfallzustandes des Versorgungsnetzes die Energieversorgung des Unterwerks aus dem Gleichspannungskreis erfolgt.

Es kann zudem ein Verfahren vorgesehen sein, bei dem bei Erkennung eines Ausfallzustandes des Versorgungsnetzes die Energieabgabe aus der Energiespeichereinrichtung in das in das Betriebsnetz auf eine vorbestimmte Leistung begrenzt wird.

Es kann zudem ein Verfahren vorgesehen sein, bei dem bei Erkennung eines Ausfallzustandes des Versorgungsnetzes unter Berücksichtigung der in der Energiespeichereinrichtung gespeicherten Energiemenge die Energieabgabe aus der Energiespeichereinrichtung in das in das Betriebsnetz derart gesteuert wird, dass der Betrieb der Nahverkehrsmittel für mindestens 5 Minuten aufrecht erhalten werden kann.

Es kann zudem ein Verfahren vorgesehen sein, bei dem bei Erkennung eines Ausfallzustandes des Versorgungsnetzes unter Berücksichtigung der in der Energiespeichereinrichtung gespeicherten Energiemenge die Energieabgabe aus der Energiespeichereinrichtung in das in das Betriebsnetz derart gesteuert wird, dass für die Nahverkehrsmittel entweder eine Energiemenge bereitgestellt wird, die zur Entfernung aus definierten Gefahrenbereichen oder eine Energiemenge zum Zurücklegen einer Entfernung von 200 Metern oder eine Energiemenge zum Zurücklegen einer Entfernung bis zu einem Haltepunkt des Nahverkehrsmittels ausreichend ist.

Die Erfindung bezieht sich zudem auf ein Betriebsnetz mit einer Vorrichtung der oben erläuterten Art.

Im Folgenden wird die Erfindung anhand von Ausführungsbeispielen in den Figuren einer Zeichnung gezeigt und anschließend erläutert.

Dabei zeigt
- Fig. 1: schematisch den Aufbau eines erfindungsgemäßen Unterwerks,
- Fig. 2: den Aufbau eines alternativen Unterwerks mit einer anders aufgebauten zweiten Speiseeinrichtung sowie
- Fig. 3: ein System mit mehreren Unterwerken zur Einspeisung in ein Betriebsnetz und mit einer übergeordneten Steuereinrichtung,
- Fig.4: einen beispielhaften zeitlichen Verlauf der Leistungsentnahme eines erfindungsgemäßen Unterwerks.

Die Figur 1 zeigt ein Unterwerk 1 zur Versorgung eines elektrischen Betriebsnetzes 2, das beispielsweise als städtisches Bahnnetz ausgebildet sein kann. Dieses Betriebsnetz 2 versorgt dann ein Nahverkehrssystem mit elektrischen Verbrauchern über Schienen oder Oberleitungen mit Strom. Das Betriebsnetz kann entweder ein Gleichstromnetz oder ein Wechselstromnetz sein. Kennzeichnend für ein derartiges Netz ist, dass die Nahverkehrsmittel, also beispielsweise Straßenbahnen, U-Bahnen oder Oberleitungsbusse, kontinuierlich mit Energie versorgt werden. Unterbrechungen können sich dabei dadurch ergeben, dass die Nahverkehrsmittel an Haltestellen stehenbleiben oder dass kurze Aussetzer in der Energieversorgung auch mit an Bord der Nahverkehrsmittel befindlichen Speichereinrichtungen überbrückt werden. Jedoch wird jedes dieser Nahverkehrsmittel die überwiegende Zeit direkt aus dem Betriebsnetz und nicht aus einem mitgeführten Energiespeicher mit Energie versorgt. Dies führt zu einer relativ hohen gleichbleibenden Grundlast, auf die durch die Unregelmäßigkeiten des Verkehrs Veränderungen, wie z. B. zusätzliche Lasten, aufgeprägt sind.

Das Unterwerk 1 weist zur Versorgung des Betriebsnetzes Einspeiseleitungen 3 auf und ist mit dem Betriebsnetz über Rückleitungen 4 zusätzlich verbunden. Das Betriebsnetz 2 ist mit einem Versorgungsnetz 5 mittels des Gleichspannungskreises 8 und einer im Unterwerk 1 befindlichen leistungselektronischen Koppeleinrichtung 6 verbunden. Diese kann beispielsweise als Wechselrichter ausgebildet sein und eine Wechselspannung des Versorgungsnetzes 5 in eine Gleichspannung umwandeln, mit der das Betriebsnetz 2 gespeist wird. Der Wechselrichter 6 kann zur Transformation der Spannungsebene mit dem Versorgungsnetz 5 mittels eines Umspanntransformators 7 gekoppelt sein.

Ist das Betriebsnetz 2 als Wechselspannungsnetz ausgebildet, so kann die Koppeleinrichtung 6 auch als Wechselrichtereinrichtung mit einer Wechselspannungseingangsleitung und einer Wechselspannungsausgangsleitung sowie einem Gleichspannungszwischenkreis ausgebildet sein.

In dem in der Figur 1 dargestellten Fall handelt es sich bei der Koppeleinrichtung um einen Wechselrichter, der einen Gleichstromkreis 8 des Unterwerks 1 mit einer Gleichspannung speist.

Bei dem Ausführungsbeispiel der Figur 1 ist der Gleichspannungskreis 8 unmittelbar über die Speiseanschlüsse 10, 11 mit dem Betriebsnetz 2 verbunden. Die Anschlüsse 10, 11 und/oder der Gleichspannungskreis 8 bilden in diesem Fall die erste Speiseeinrichtung 10, 11.

Der Gleichspannungskreis 8 ist mit einer Energiespeichereinrichtung 9 über eine Koppeleinrichtung 12 verbunden. Diese ist als Gleichspannungswandler (DC/DC-Wandler) ausgebildet, um sowohl bei der Aufladung des Energiespeichers 9 aus dem Versorgungsnetz über den Gleichspannungskreis 8 bzw. durch Rückspeisung aus dem Betriebsnetz 2 als auch umgekehrt bei der Speisung des Gleichspannungskreises 8 oder des Betriebsnetzes 2 aus der Energiespeichereinrichtung 9 die Spannungsverhältnisse geeignet einzustellen.

Es kann zudem auch vorgesehen sein, dass Energie aus der Energiespeichereinrichtung 9 über den Gleichspannungskreis 8 und den Wechselrichter 6 in das Versorgungsnetz 5 zu geeigneter Zeit rückgespeist wird. Hierauf wird weiter unten noch näher eingegangen.

In dem Unterwerk 1 sind zudem zweite Speiseeinrichtungen 13, 13", 13‴ vorgesehen, die den Gleichspannungskreis 8 mit Zusatznutzern über die Anschlüsse 15, 16, 17 verbinden.

Die zweiten Speiseeinrichtungen 13, 13", 13‴ sind in einer besonders vorteilhaften Ausgestaltung als galvanisch trennende Gleichspannungswandler ausgebildet. Dies ermöglicht einerseits die Regelung der Ausgangsspannungen oder Ausgangsströme für die Anschlüsse 15, 16,17 zur Versorgung der Zusatznutzer, beispielsweise im Rahmen der Betriebsspannung des Betriebsnetzes 2. Das Betriebsnetz kann dabei eine Nenn-Gleichspannung von 600 V oder 750 V aufweisen. Eine Regelung der Spannung für die Zusatznutzer in diesem Bereich, d. h. zwischen 0 V und 750 V, wird damit einfach möglich. Es können jedoch auch andere Spannungen eingestellt werden.

Durch die besonders vorteilhafte Ausgestaltung der zweiten Speiseeinrichtungen 13, 13", 13‴ in Form galvanisch-trennender Wandler entsteht die Möglichkeit, Isolationsanforderungen der Zusatznutzer individuell zu bedienen. Während bei Metallschienen bzw. die darauf geführten, metallbereiften Fahrzeuge einen niederohmigen Kontakt aller einfach berührbarer Komponenten zur Erde, typischerweise in der Größenordnung von 10 Ω, haben und damit Isolationsfehler zwischen dem hohen Traktionspotential und jenen Komponenten sofort in einen Ladungsabfluss Richtung Erde (und damit nicht zu potentiell lebensgefährlichen Spannungen zwischen jenen Komponenten und der betretbaren Erde) führen, besteht bei hochohmiger Anbindung, bspw. wegen Gummibereifung, im entsprechenden Isolationsfehlerfall potentiell Lebensgefahr. Durch die vorteilhafte galvanische Trennung kann zusatznutzerseitig ein Massepotential geschaffen werden, welches in keinem Zusammenhang mit dem Erdpotential steht (IT-Netz). Das Auftreten eines einzelnen Isolationsfehlers führt somit noch nicht zu einer gefährlichen Berührspannung (ein-fehler-tolerant). Erst ein sehr unwahrscheinliches gleichzeitiges Auftreten mehrerer unabhängiger Isolationsfehler ist potentiell lebensgefährlich.

Das Unterwerk 1 kann mit einer Steuereinrichtung 19 verbunden sein, die den Leistungsfluss zwischen Koppeleinrichung 6 und Versorgungsnetz 5 steuert. Das Versorgungsnetz 5 ist in dem angegebenen Beispiel ein Wechselspannungsnetz mit einer Frequenz von 50 Hz und einer Spannung von wenigstens 10 kV. Eine Sensoreinrichtung 20 erfasst und übermittelt Frequenz, Phase und Spannung in dem Versorgungsnetz 5 an die Steuereinrichtung 19. Zudem ist eine Informationseinrichtung 21 vorgesehen, die beispielsweise Lastprognosen und Preisprognosen für den Strommarkt an die Steuereinrichtung 19 übermittelt. Eine zweite Sensoreinrichtung 22, die mit dem Betriebsnetz 2 verbunden ist, übermittelt an die Steuereinrichtung 19 Lasten der Verbraucher, d. h. der Verkehrsmittel, sowie prognostizierte Lasten, die sich aus den Standorten der einzelnen Nahverkehrsmittel und Fahrplänen ergeben können.

Die Steuereinrichtung 19 ist dazu mit dem Wechselrichter und mit der bidirektionalen Koppeleinrichtung 12 über Steuerleitungen verbunden.

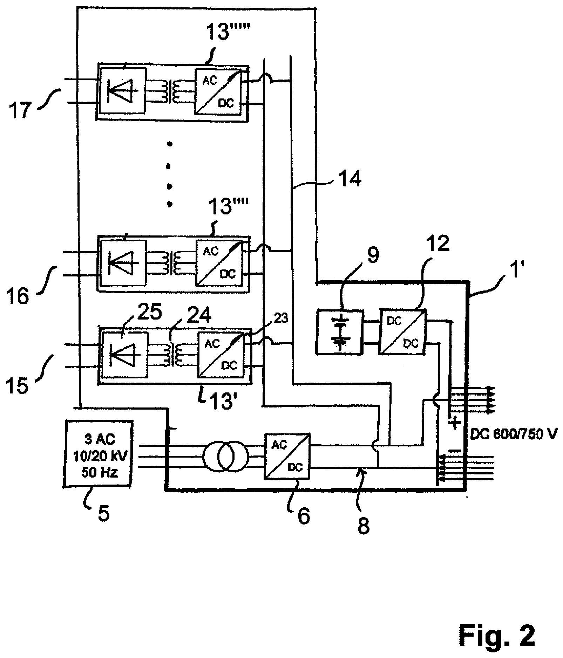

In der Figur 2 ist ein modifiziertes Unterwerk 1' dargestellt, dessen Kopplung an das Versorgungsnetz 5 ebenso mit einem Wechselrichter 6 gestaltet ist, wie dies in der Figur 1 gezeigt ist. Ebenso ist eine Energiespeichereinrichtung 9 vorgesehen, die mittels einer bidirektionalen Koppeleinrichtung 12 mit dem Gleichspannungskreis 8 verbunden ist. Auch das Unterwerk 1' ist mittels Anschlüssen 15, 16, 17 mit Zusatznutzern, zum Beispiel Ladestationen, verbunden. Die Zusatznutzer können, wie auch gemäß der Figur 1, als Ladestation für Elektrofahrzeuge oder andere aufzuladende Elemente ausgestaltet sein.

In der Figur 2 sind in dem Unterwerk 1' die zweiten Speiseeinrichtungen 13', 13"", 13‴‴ jedoch anders aufgebaut als die zweite Speiseeinrichtung 13 aus der Figur 1. Die zweiten Speiseeinrichtungen 13', 13ʺʺ, 13‴ʺ weisen Wechselrichter 23 auf, die mit dem Gleichspannungskreis 8 verbunden sind und die Gleichspannung aus dem Gleichspannungskreis 8 in eine Wechselspannung umwandeln. Die Wechselrichter 23 sind mittels Trenntransformatoren 24 mit Gleichrichtern 25 verbunden, die Wechselspannung gleichrichten und eine Gleichspannung zu den Anschlüssen 15, 16, 17 leiten. Bei den zweiten Speiseeinrichtungen 13', 13"", 13‴ʺ wird somit die galvanische Trennung/Isolierung mittels Trenntransformatoren 24 realisiert.

Die übrigen anhand der Figur 1 dargestellten und mit dem Unterwerk 1 verbundenen Elemente können ebenso auch mit dem Unterwerk 1' verbunden werden und zusammenwirken.

Ergänzend soll noch ausgeführt werden, dass die Energiespeichereinrichtung 9 als mechanischer Speicher, als elektrochemischer Speicher oder auch als elektrostatischer Speicher ausgebildet sein kann.

Die Ausführung als mechanischer Speicher kann beispielsweise einen Schwungmassespeicher vorsehen, der üblicherweise eine rotierende Schwungmasse aufweist, die je nach dem Material, aus dem sie besteht, Drehzahlen bis etwa 3.000 pro Minute (betrifft metallische Schwungmassen) oder bis zu 25.000 pro Minute (betrifft Kohlefaserwerkstoffe) erreichen kann. Solche Energiespeicher werden bereits in Gleichrichterunterwerken bekannter Bauart benutzt. Sie speichern üblicherweise elektrische Bremsenergie und speisen diese unmittelbar in ein Betriebsnetz zurück, sind aber auf Kapazitäten im Bereich weniger kWh beschränkt.

Als elektrostatische Speicher sind Doppelschichtkondensatorsysteme bekannt, die beispielsweise Energien bis zu 2,5 kWh kurzzeitig speichern können.

Als elektrochemische Speicher werden nach dem Stand der Technik üblicherweise Lithium-Ionen-Speicherzellen benutzt, jedoch soll hier mit dem Begriff auch jede andere elektrochemische Speicherzellenart umfasst sein. Es können hierzu beispielsweise gebrauchte Batteriezellen, beispielsweise aus Fahrzeugen, insbesondere aus Nahverkehrsmitteln, weiterverwendet werden, da diese in der Energiespeichereinrichtung 9 geringeren Anforderungen unterliegen können als bei der direkten Anwendung für einen Traktionsantrieb in beispielweise einem Fahrzeug wie einem Nahverkehrsmittel, beispielsweise einem Elektrobus. Damit ergibt sich eine Entsorgungsvermeidung und die Investitionshöhe verringert sich.

Die Verwendung des erfindungsgemäßen Unterwerks, das gleichzeitig ein Betriebsnetz 2 und Zusatznutzer speisen kann, entwickelt ihre Wirksamkeit unter anderem auch daraus, dass die Zusatznutzer sich topologisch und geografisch in der Nähe des Betriebsnetzes 2 befinden, so dass beispielsweise die Zuleitung 14 über Trassen gelegt werden kann, die auch für das Betriebsnetz 2 verwendet werden. Die Zuleitung 14 und das Betriebsnetz 2 sind zwar elektrisch voneinander getrennt, jedoch können organisatorisch und topologisch Synergien genutzt werden, wie beispielsweise die gemeinsame Energiespeichereinrichtung 1, 1', zusätzlich zu den elektrischen Synergien im Unterwerk 1, 1'. Letztlich ist es auch denkbar, wenn an Ladestationen an den Anschlüssen 15, 16, 17 Energiespeicher zur Ladung angeschlossen sind, die Entladung dieser Energiespeicher wenigstens teilweise zu ermöglichen und von dort aus gezielt Energie mittels der zweiten Speiseeinrichtungen 13, 13' in den Gleichspannungskreis 8 zurück zu ermöglichen, um von hier aus entweder das Betriebsnetz 2 in Notfällen zu speisen oder Energie in das Versorgungsnetz 5 zurückzuspeisen. Damit können auch die Energiespeicher von etwaigen Zusatznutzern netzdienlich eingesetzt werden.

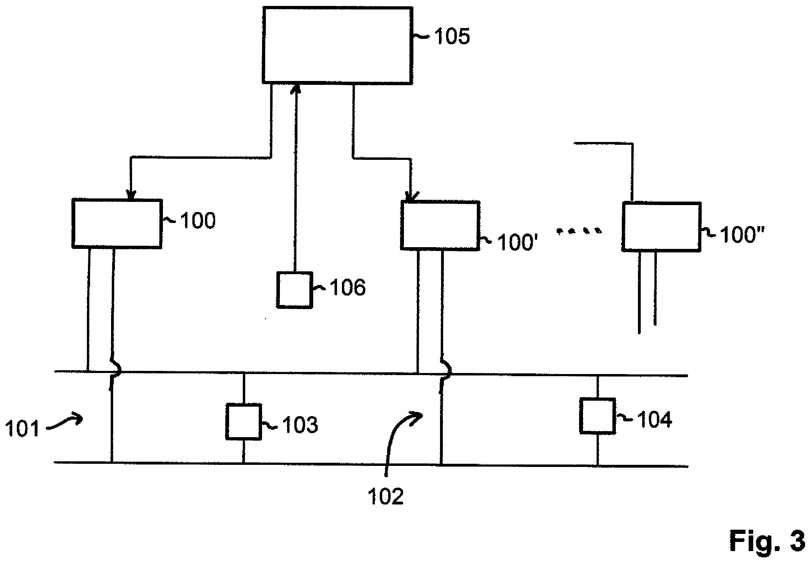

Die Figur 3 zeigt beispielhaft mehrere Unterwerke 100, 100', 100", die ebenso aufgebaut sein können wie die in den Figuren 1 und 2 gezeigten Unterwerke. Die verschiedenen Unterwerke 100, 100' speisen in das Betriebsnetz 2 an den unterschiedlichen Anschlusspunkten 101 und 102 elektrische Energie ein. Es sind beispielhaft Nahverkehrsmittel 103, 104 schematisch an verschiedenen Stellen des Betriebsnetzes 2 dargestellt.

Es ergibt sich aus den Grundregeln der Elektrotechnik, dass je nachdem, an welcher Stelle innerhalb des Betriebsnetzes 2 durch Nahverkehrsmittel 103, 104 Energie abgenommen wird, eine Einspeisung über den ersten Anschlusspunkt 101 oder den zweiten Anschlusspunkt 102 energieeffizienter ist. Auch eine kombinierte Einspeisung von Energie über die Anschlusspunkte 101, 102 kann sinnvoll sein, indem beispielsweise die eingespeisten Spannungen oder Ströme an den Punkten 101, 102 gleich oder unterschiedlich eingestellt werden.

Handelt es sich bei dem Betriebsnetz 2 um ein Wechselspannungsnetz, so können auch Phasen der Einspeisung von Wechselspannung an den Anschlusspunkten 101, 102 derart aufeinander abgestimmt sein, dass die Lastflüsse in dem Betriebsnetz 2 optimiert werden.

Um die Einstellung der gelieferten Betriebsspannungen an den Anschlusspunkten 101, 102 durch die Unterwerke 100, 100' zu steuern oder zu regeln, ist eine übergeordnete Steuereinrichtung 105 vorgesehen, die Steuersignale an die Unterwerke 100, 100' leitet. Die übergeordnete Steuereinrichtung 105 ist mit einer Sensoreinrichtung 106 verbunden, die die Orte und das prognostizierte Verbrauchsverhalten verschiedener Verbraucher/ Nahverkehrsmittel 103, 104 in dem Betriebsnetz 2 sowie die Orte, an denen im Betriebsnetz 2 die entsprechende Energie abgenommen wird, ermittelt. Die Sensoreinrichtung 106 übermittelt diese Information an die übergeordnete Steuereinrichtung 105, die hieraus die Steuergrößen für die Unterwerke 100, 100' zur geeigneten Einspeisung ermittelt und diese an die Unterwerke signalisiert.

Auf diese Weise ist eine unter Energieeffizienzgesichtspunkten und/oder durch vorteilhaft gestaltete zeitliche und mengenmäßige Energieentnahme zwischen den wenigstens zwei Unterwerken 1, 1' optimierte Versorgung des Betriebsnetzes aus einer Anzahl von zwei oder mehr Unterwerken ermöglicht. Die Versorgung entsprechender Zusatznutzer durch die Unterwerke 100, 100' ist bei einer solchen Konstellation ebenso wie anhand der Figuren 1 und 2 geschildert möglich. Auch die Einspeisung von Energie aus Energiespeichereinrichtungen, die sich innerhalb der Unterwerke 100, 100' befinden, oder unmittelbar aus dem Unterwerk 100, 100' in ein Versorgungsnetz ist bei einer Konstellation gemäß der Figur 3 möglich.

Ein zusätzlicher Aspekt, der auch eigenständig eine Erfindung darstellt, liegt in einer Vorrichtung zur Energieversorgung eines elektrischen Betriebsnetzes für elektrisch betriebene Nahverkehrsmittel, insbesondere mit kontinuierlichem Energiebezug, mit einem Unterwerk, das folgende Elemente aufweist:
einen Gleichspannungskreis, der mit einem Versorgungsnetz mittels eines ersten Wechselrichters verbunden ist,
eine erste, durch den Gleichspannungskreis gebildete oder mit diesem verbundene Speiseeinrichtung für das Betriebsnetz und eine Energiespeichereinrichtung, die mit dem Gleichspannungskreis durch eine bidirektionale Koppeleinrichtung verbunden ist, wobei die Energiespeichereinrichtung eine Energiespeicherkapazität von wenigstens 30 kWh, insbesondere wenigstens 50 kWh, weiter insbesondere wenigstens 100 kWh aufweist.

Diese Vorrichtung kann durch alle Merkmale der weiter oben erläuterten Vorrichtung ergänzt sein, wobei zweite und weitere Speiseeinrichtungen für Zusatznutzer in den Fällen dieser Kombinationen weggelassen sein können.

Insbesondere kann eine Steuereinrichtung des Unterwerks mit einer Sensoreinrichtung für die Spannung, Frequenz und Phase des Versorgungsnetzes sowie einer Informationseinrichtung für aktuelle und/oder prognostizierte Last des Versorgungsnetzes verbunden sein, um den Bezug von Energie aus dem Versorgungsnetz oder die Einspeisung in das Versorgungsnetz unter Berücksichtigung der Speicherkapazität zum optimierten Zeitpunkt durchführen zu können.

Mit dem Ziel, Bremsenergie von Stadtbahnen möglichst vollständig aufnehmen und zwischenspeichern zu können, muss der Energiespeicher eine ausreichende (elektrische) Leistungsfähigkeit aufweisen. Bremsleistungen aus dem Speisenetz sind mindestens in Höhe der Netzanschlussleistung des Unterwerks, in welchem der Energiespeicher integriert wird, zu erwarten. Moderne marktübliche Hochleistungsbatterien, welche für sogenannte Schnellladevorgänge geeignet sind, weisen eine Laderate bis zu 5 h⁻¹ auf. Dies bedeutet, dass so ein Speicher in 12 Minuten vollständig wiederaufgeladen werden kann. Die Laderate bezeichnet somit das Verhältnis von Ladeleistungsfähigkeit zum Energieinhalt des Energiespeichers.

Die Laderate LR wird auch als C-Rate bezeichnet. $LR = \frac{P}{E} = \frac{I}{Q} … \left[\frac{1}{h}\right]$

Wenn eine Batterie mit 10kWh Speichergröße mit max. 20kW geladen werden darf oder kann, dann ist ihre maximale Laderate oder C-Rate 2 h⁻¹ . Die C-Rate wird in diesem Fall als "2C" angegeben.

Will man also den Energiespeicher im Unterwerk zur vollständigen Aufnahme von Bremsenergie ausbilden, muss das Verhältnis dessen Energiespeicherinhaltes in kWh zur Netzanschlussleistung des Unterwerks zumindest 1h/5 der Netzanschlussleistung des Unterwerks in kVA entsprechen.

Der Speicher muss mindestens so groß sein, dass er bei avisierter Lade-/Entladeleistung die zulässige C-Rate nicht übersteigt. Dementsprechend wird nach aktuellem Stand der Technik von einer C-Rate von 5 ausgegangen. Zukünftig könnten bei Erhöhung zulässiger C-Raten die Speicherkapazitäten kleiner ausfallen. Hierbei ist allerdings zu beachten, dass ein weiterer Zweck des Speichers noch zuverlässig erfüllt werden muss. Dieser ist die Erhöhung der Versorgungssicherheit für die angeschlossenen Straßenbahnen und Ladepunkte der Elektrobusse. Hierbei muss der Speicher weiterhin immer so groß sein, dass diese Fahrzeuge nutzbringend weiter betrieben werden können, beispielsweise zur Gewährleistung von 5 Minuten Betrieb während eines Stromausfalls. Auch hierfür ist aktuell der der Wert für die vorgehaltenen Kapazität von 1h/5 der Anschlussleistung vorzusehen.

Ein mittleres Unterwerk für die Versorgung von Stadtbahnen weist eine Netzanschlussleistung von 2500 kVA auf, für ein solches Unterwerk wäre ein Energiespeicher mit mindestens 500 kWh Nutzkapazität vorzuhalten. Da diese Leistungsfähigkeit auch noch am Lebensdauerende des Energiespeichers, hier bei einer Restkapazität von 80 %, vorhanden sein soll, wäre ein Energiespeicher mit 600 kWh Nennkapazität zu integrieren.

In der Regel erfüllen Nahverkehrsbetriebe mit elektrisch angetriebenen Verkehrsmitteln alle Anforderungen, um vom Stromnetzbetreiber einen Tarif für Großkunden mit registrierter Leistungsmessung zu erhalten. Dieser zeichnet sich durch deutlich geringere Kosten pro kWh bezogener Energie aus, und unterscheidet die Kosten pro kWh teils nach Haupt- oder Nebentarif. Die Gesamtnutzungsentgelte für Großkunden mit registrierter Leistungsmessung teilen sich folgende drei Komponenten auf:
1. Der Arbeitspreis, welcher in Cent pro kWh berechnet wird,
2. Ein jährlich zu entrichtender Grundpreis,
3. Der Leistungspreis in Euro pro kW Leistung.

Berechnet wird das Leistungsentgelt über die maximale 15-Minutenleistung des Verbrauchers innerhalb eines Jahres, multipliziert mit dem entsprechenden Leistungspreis des Versorgungsunternehmens. Dabei spielt es keine Rolle, wie häufig oder regelmäßig die entsprechende Leistungsspitze im Jahr auftritt. Eine hohe Leistungsspitze hat dementsprechend ein hohes Leistungsentgelt für den Verbraucher zur Folge.

Erklären lässt sich die Preisberechnung über die maximale 15-Minutenleistung dadurch, dass die maximal abgefragte Leistung ein Maß für die Bereitstellungskosten des Energieversorgungsunternehmens (EVU) ist. Des Weiteren sollen durch diese Preisberechnung Anreize für Verbraucher gesetzt werden, ihren Energieverbrauch zu vergleichmäßigen, um somit einen möglichst wirtschaftlichen Betrieb konventioneller thermischer Kraftwerke mit konstanter Energieeinspeisung zu ermöglichen.

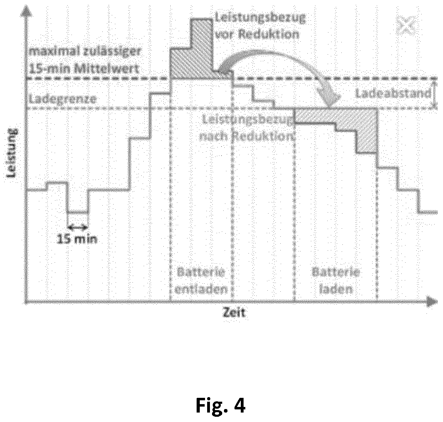

Eine Möglichkeit, die Gesamtnutzungsentgelte von Nahverkehrsbetrieben zu vermindern, besteht im sogenannten Peak-Shaving. Den Leistungsverlauf mit und ohne Peak-Shaving im Vergleich zeigt Fig. 4.

Wie in Fig. 4 erkennbar, ist werden im Vorhinein zwei Leistungsgrenzen definiert, die Ladegrenze und ein Maximalwert für den zulässigen Mittelwert der 15-min Leistung. Der Abstand zwischen diesen beiden Grenzen wird als Ladeabstand bezeichnet, in welchem kein Leistungsaustausch an der Batterie erfolgt. Erreicht der Mittelwert der 15-min Leistung den vorher definierten Grenzwert, wird die Differenz zwischen benötigter Leistung und der definierten Grenzleistung vom Batteriespeicher bereitgestellt, um das Entstehen einer Leistungsspitze zu verhindern. In Fig. 4 ist dieser Bereich oberhalb des maximal zulässigen 15-min Mittelwertes schraffiert. Wird die definierte Grenze unterschritten und der Leistungsbedarf befindet sich wieder im Bereich des Ladeabstands, wird die Entladung der Batterie beendet. Unterschreitet der Leistungsbedarf die Ladegrenze, wird die Leistung konstant auf dem Niveau der Ladegrenze gehalten, bis der Energiespeicher wieder seine gewünschte Kapazität erreicht hat, er wird also geladen. Dieser Bereich ist in Fig. 4 unterhalb der dargestellten Ladegrenze schraffiert.

Um sinnvolle Grenzen des Ladeabstands definieren zu können, ist es notwendig, eine möglichst große Datenbasis zur Verfügung zu haben, um sowohl die Höhe, als auch die Dauer der wahrscheinlich auftretenden Leistungsspitzen möglichst genau vorhersagen zu können. Im betrachteten Fall eines Gleichrichterunterwerks lassen sich die Spitzen relativ gut vorhersagen, da anhand der Fahrplandaten der im Speiseabschnitt des Unterwerks verkehrenden Straßenbahn- und der zusätzlich zu versorgenden Elektrobuslinien Momente großen Leistungsbedarfs gut erkennbar sind.

Ab und an kommt es zu einem Stromausfall in Innenstädten. In Folge solch einer der Störung können elektrisch angetriebene Stadtbahnen nicht weiter verkehren.

Im Falle einer solchen Havarie wie des beschriebenen Stromausfalles, kann der Traktionsenergiebedarf der Stadtbahnen kurzzeitig durch den im Unterwerk installierten Energiespeicher bereitgestellt werden. Zwar würde die im Speicher vorhandene Energiemenge nicht in jedem Fall ausreichen, um die Bahnen zu ihren Endhaltestellen zu befördern, aber zumindest wäre es den Bahnen möglich, Kreuzungen oder andere freizuhaltende Flächen zu räumen oder reguläre Haltestellen zum Zwecke des gefahrfreien Personenausstiegs noch zu erreichen. Gegebenenfalls ist es dazu erforderlich, durch geeignete Sensorik und Steuerungsverfahren den Netzausfall zu erkennen und die Versorgung der Bahnen und Zusatznutzer derart zu gestalten, dass verfügbare Energie- und Leistungsreserven für diesen Zweck ausreichend sind. So kann beispielsweise dafür Sorge getragen werden, dass Leistungsflüsse so begrenzt und/oder zeitlich gestaffelt werden, dass die verfügbare Energie ausreicht, alle Bahnen im Speiseabschnitt in einen beschriebenen, sicheren Zustand zu bringen und den Passagieren das sichere Aussteigen zu ermöglichen. Auch können entsprechende Ladebedarfe der Zusatznutzer berücksichtigt werden Beispielsweise wird die private PKW-Ladung unterbrochen, während E-Busse weiter geladen oder Bahnen weiter betrieben werden dürfen.

Die Verkehrsbehinderung könnte damit so gering wie möglich gehalten werden, und die betreibenden Verkehrsbetriebe müssen weniger Vorsorgemaßnahmen für solche Havariefälle, wie das Vorhalten schwerer Schleppfahrzeuge oder mobiler Stromerzeuger, treffen.

Auch kann während der Havarie die Funktion der Steuer- und Leittechnik durch den Energiespeicher aufrechterhalten werden; zwar existieren in heutigen Unterwerken bereits teilweise Unterbrechungsfreie Stromversorgungseinrichtungen (USV) auf Batteriebasis (zumeist wartungsintensive Bleibatterien). Jedoch könnten diese in Zukunft entfallen, womit der Wartungs-, Instandhaltungs- und auch der Errichtungs- und Platzaufwand sinkt.

Die Nutzung des Batteriespeichers zur (Weiter-)Speisung von Kommunikations-, bspw. Mobilfunktechnik ist eine weitere zu erörternde Einsatzmöglichkeit.

Thermischen Kraftwerken wie beispielsweise Kohle- oder Kernkraftwerke muss, sollten sie abgeschaltet worden sein, zunächst zum Start eine große Menge elektrischer Energie zugeführt werden, bevor sie selbst elektrische Energie liefern können. Sie sind alleine betrachtet also nicht schwarzstartfähig und verfügen daher über eine zusätzliche schwarzstartfähige Einheit. Energieerzeuger, die ohne äußere Energiezufuhr Leistung bereitstellen können, werden als schwarzstartfähig bezeichnet. Unter diese Kategorie fallen beispielsweise Wasserkraft-, Pumpspeicher-, und auch Batteriespeicherkraftwerke. Neben den beschriebenen Vorteilen der Kreuzungsräumung könnte der im Unterwerk installierte Energiespeicher somit bei einem Stromausfall zusätzlich zum schnellen Wiederaufbau des Stromnetzes beitragen.

Diese Betriebsfälle sind bei der Auslegung der Batteriegröße zu berücksichtigen. Eine erfindungsgemäße Mindestgröße lässt sich wie folgt abschätzen: 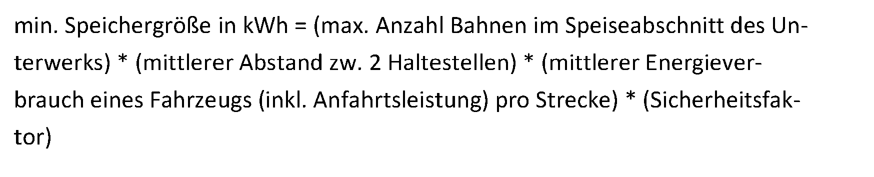 min. Speichergröße in kWh = (max. Anzahl Bahnen im Speiseabschnitt des Unterwerks) * (mittlerer Abstand zw. 2 Haltestellen) * (mittlerer Energieverbrauch eines Fahrzeugs (inkl. Anfahrtsleistung) pro Strecke) * (Sicherheitsfaktor) wobei der Sicherheitsfaktor mind. die entstehenden Verluste, sowie eine zu verbleibende Restenergiemenge, berücksichtigen bzw. kompensieren muss.

## Patentansprüche

1. Vorrichtung zur Energieversorgung eines elektrischen Betriebsnetzes (2) für elektrisch betriebene Nahverkehrsmittel (103 ,104) mit kontinuierlichem Energiebezug, mit einem Unterwerk (1, 1', 100, 100'), das folgende Elemente aufweist:
einen Gleichspannungskreis (8), welcher mit einem Versorgungsnetz (5) mittels eines ersten Wechselrichters (6) verbunden ist,
eine erste, durch den Gleichspannungskreis gebildete oder mit diesem verbundene Speiseeinrichtung (10, 11) für das Betriebsnetz (2),
eine Energiespeichereinrichtung (9), die mit dem Gleichspannungskreis (8) durch eine bidirektionale Koppeleinrichtung (12) verbunden ist,
**dadurch gekennzeichnet, dass** die Energiespeichereinrichung eine Kapazität von wenigstens 30 KWh aufweist und
das Unterwerk (1, 1', 100, 100') weiterhin aufweist:
wenigstens eine zweite mit dem Gleichspannungskreis verbundene Speiseeinrichtung (13, 13', 13", 13"', 13ʺʺ, 13‴ʺ) vorgesehen zur Versorgung eines oder mehrerer Zusatznutzer,
eine Steuereinrichtung (19) zur Steuerung des Leistungsflusses zwischen Gleichspannungskreis (8) und Versorgungsnetz (5), und
eine Sensorvorrichtung (22), die mit dem Betriebsnetz (2) verbunden ist und Lasten von Verbrauchern im Betriebsnetz (2), sowie prognostizierte Lasten der Verbraucher an die Steuereinrichtung (19) übermittelt.

2. Vorrichtung nach Anspruch 1, **dadurch gekennzeichnet, dass** die zweiten Speiseeinrichtungen (13, 13', 13", 13"', 13ʺʺ, 13‴ʺ) galvanisch trennend ausgebildet sind und zur Regelung der Ausgangsspannung oder des Ausgangsstroms auf der Seite der Zusatznutzer eingerichtet sind.

3. Vorrichtung nach Anspruch 1 oder 2, **dadurch gekennzeichnet, dass** die wenigstens eine zweite Speiseeinrichtung (13) einen isolierten Gleichspannungswandler oder einen Wechselrichter mit einem Trenntransformator (24) und einem Diodengleichrichter oder einen Wechselrichter mit einem Trenntransformator und einem geregelten Gleichrichter aufweist.

4. Vorrichtung nach Anspruch 1 oder einem der folgenden, **dadurch gekennzeichnet, dass** der erste Wechselrichter (6) für einen bidirektionalen Betrieb eingerichtet ist.

5. Vorrichtung nach Anspruch 1 oder einem der folgenden, **dadurch gekennzeichnet, dass** die bidirektionale Koppeleinrichtung (12) eine Leistungselektronikeinrichtung, insbesondere einen Gleichspannungswandler aufweist.

6. Vorrichtung nach Anspruch 1 oder einem der folgenden, **dadurch gekennzeichnet, dass** die Energiespeichereinrichtung (9) einen elektrochemischen und/oder einen mechanischen und/oder einen elektrostatischen Energiespeicher aufweist.

7. Vorrichtung nach Anspruch 1 oder einem der folgenden, **dadurch gekennzeichnet, dass** der erste Wechselrichter (6) dazu eingerichtet ist, einen vom Unterwerk (1, 1', 100, 100') in das Versorgungsnetz (5) gespeisten und/oder daraus entnommenen Strom über eine erste Zuleitung zum oder vom Versorgungsnetz (5) zu leiten und dass eine erste elektrische Leitung des Betriebsnetzes (2) mit dem Versorgungsnetz derart verbindet, dass sie eine Leitung für den Strom zum und/oder vom Unterwerk bildet.

8. Vorrichtung nach Anspruch 1 oder einem der folgenden, **dadurch gekennzeichnet, dass** der erste Wechselrichter (6) dazu eingerichtet ist, einen vom Unterwerk (1, 1', 100, 100') in das Versorgungsnetz (5) gespeisten und/oder daraus entnommenen Strom über eine erste Zuleitung zum und/oder vom Versorgungsnetz (5) zu leiten und dass eine Leistung aus der Energiespeichereinrichtung (9) zur Einspeisung in das Versorgungsnetz entnehmbar ist oder eine aus dem Versorgungsnetz bezogene Leistung in die Energiespeichereinrichtung übertragbar ist.

9. Vorrichtung nach Anspruch 1 oder einem der folgenden, **dadurch gekennzeichnet, dass** die Steuereinrichtung (19) des Unterwerks mit wenigstens einer Sensoreinrichtung (20, 21) verbunden ist, die die Spannung und/oder Frequenz und/oder Phasenlage des Versorgungsnetzes (5) erfasst.

10. Vorrichtung nach Anspruch 1 oder einem der folgenden, **dadurch gekennzeichnet dass** das Verhältnis des Energieinhalts der Energiespeichereinrichtung (9) zur Anschlussleistung des Unterwerks (1, 1', 100, 100') mindestens 1h/5 beträgt.

11. Vorrichtung nach Anspruch 1 oder einem der folgenden, **dadurch gekennzeichnet dass** die maximale Kapazität des Energiespeichers (9) so ausgestaltet ist, dass mindestens die 2-fache Energiemenge aufgenommen werden kann, welche durchschnittlich stündlich an die Zusatznutzer abgegeben wird.

12. Vorrichtung nach Anspruch 1 oder einem der folgenden, **dadurch gekennzeichnet dass** dass die Steuereinrichtung (19) des Unterwerks (1, 1', 100, 100') mit wenigstens einer Sensoreinrichtung verbunden ist, die mindestens einen Betriebszustand des Versorgungsnetzes (5) erfasst.

13. Vorrichtung nach Anspruch 1 oder einem der folgenden, **dadurch gekennzeichnet dass** das Unterwerk (1, 1', 100, 100') eine Vorrichtung aufweist, die mit dem Gleichspannungskreis (8) verbunden und die ausgebildet ist, Niederspannungsverbraucher des Unterwerks (1, 1', 100, 100') mit Energie zu versorgen.

## Claims

1. A device for supplying power to an electrical power grid (2) for electrically powered local transit vehicles (103, 104) that draw power continuously, comprising a substation (1, 1', 100, 100') that comprises the following components:
a DC circuit (8) that is connected to a power supply network (5) via a first inverter (6),
a first power supply device (10, 11) for the power grid (2), formed by or connected to the DC circuit,
an energy storage device (9) connected to the DC circuit (8) via a bidirectional coupling device (12),
**characterized in that** the energy storage device has a capacity of at least 30 kWh and
the substation (1, 1', 100, 100') further comprises:
at least one second power supply device (13, 13', 13'", 13'", 13"", 13'"") connected to the DC circuit, provided to supply one or more auxiliary loads,
a control device (19) for controlling the power flow between the DC circuit (8) and the power supply network (5), and
a sensor device (22) that is connected to the power grid (2) and transmits load by consumers in the power grid (2), as well as forecasted loads for the consumers, to the control device (19).

2. The device according to claim 1, **characterized in that** the second power supply devices (13, 13', 13", 13'", 13"", 13'"") are designed to provide galvanic isolation and are configured to regulate the output voltage or output current on the side of the auxiliary loads.

3. The device according to claim 1 or 2, **characterized in that** the at least one second power supply device (13) comprises an isolated DC voltage converter or an inverter with an isolation transformer (24) and a diode rectifier, or an inverter with an isolation transformer and a regulated rectifier.

4. The device according to claim 1 or one of the following, **characterized in that** the first inverter (6) is configured for bidirectional operation.

5. The device according to claim 1 or one of the following, **characterized in that** the bidirectional coupling device (12) comprises a power electronics device, in particular a DC voltage converter.

6. The device according to claim 1 or one of the following, **characterized in that** the energy storage device (9) comprises an electrochemical and/or a mechanical and/or an electrostatic energy storage element.

7. The device according to claim 1 or any of the following, **characterized in that** the first inverter (6) is configured to route electricity fed into the power supply network (5) from the substation (1, 1', 100, 100') and/or drawn from it via a first feeder to or from the power supply network (5), and that a first electrical line of the power grid (2) connects to the power supply network in such a way that it forms a line for the current to and/or from the substation.

8. The device according to claim 1 or one of the following, **characterized in that** the first inverter (6) is configured to feed electricity fed from the substation (1, 1', 100, 100') into the power supply network (5) and/or drawn from it via a first feed line to and/or from the power supply network (5), and that power can be drawn from the energy storage device (9) for feeding into the power supply network, or power drawn from the power supply network can be transferred to the energy storage device.

9. The device according to claim 1 or any of the following, **characterized in that** the control device (19) of the substation is connected to at least one sensor device (20, 21) that detects the voltage and/or frequency and/or phase angle of the power supply network (5).

10. The device according to claim 1 or any of the following, **characterized in that** the ratio of the energy content of the energy storage device (9) to the connected load of the substation (1, 1', 100, 100') is at least 1h/5.

11. The device according to claim 1 or any of the following, **characterized in that** the maximum capacity of the energy storage device (9) configured such that it can store at least twice the amount of energy that is, on average, supplied to the auxiliary loads each hour.

12. The device according to claim 1 or one of the following, **characterized in that** the control device (19) of the substation (1, 1', 100, 100') is connected to at least one sensor device that detects at least one operating state of the power supply network (5).

13. The device according to claim 1 or one of the following, **characterized in that** the substation (1, 1', 100, 100') comprises a device that is connected to the DC circuit (8) and is configured to supply power to low-voltage loads of the substation (1, 1', 100, 100').

## Revendications

1. Dispositif servant à alimenter en énergie un réseau de service électrique (2) pour des transport sen commun de proximité à fonctionnement électrique (103,104) avec un apport d'énergie continu, comprenant une sous-station (1,1', 100,100'), présentant les éléments suivants :
un circuit de tension continue (8) qui est raccordé à un réseau d'alimentation (5) au moyen d'un premier onduleur (6),
un premier dispositif d'injection (10,11) formé par le circuit de tension continue ou raccordé à celui-ci pour le réseau de service (2),
un dispositif de stockage d'énergie (9) qui est raccordé au circuit de tension continue (8) par un dispositif de couplage bidirectionnel (12),
**caractérisé en ce que** le dispositif de stockage d'énergie présente une capacité d'au moins 30 kWh et
la sous-station (1, 1', 100, 100') présente en outre :
au moins un second dispositif d'injection (13, 13', 13'", 13'", 13"", 13'"") raccordé au circuit de tension continue, servant à l'alimentation d'un ou plusieurs utilisateurs supplémentaires,
un dispositif de commande (19) destiné commander le flux de puissance entre le circuit de tension continue (8) et le réseau d'alimentation (5), et
un dispositif de capteur (22) qui est raccordé au réseau de service (2) et transmet au dispositif de commande (19) des charges des utilisateurs du réseau de service (2), ainsi que des charges prévues des utilisateurs.

2. Dispositif selon la revendication 1, **caractérisé en ce que** les seconds dispositifs d'injection (13, 13', 13", 13'", 13"", 13'"") sont conçus pour une isolation galvanique et sont configurés pour réguler la tension de sortie ou le courant de sortie du côté des utilisateurs supplémentaires.

3. Dispositif selon la revendication 1 ou 2, **caractérisé en ce que** le au moins un second dispositif d'injection (13) présente un convertisseur de tension continue isolé ou un onduleur avec un transformateur d'isolement (24) et un redresseur à diodes, ou un onduleur avec un transformateur d'isolement et un redresseur régulé.

4. Dispositif selon la revendication 1 ou l'une des suivantes, **caractérisé en ce que** le premier onduleur (6) est configuré pour un fonctionnement bidirectionnel.

5. Dispositif selon la revendication 1 ou l'une des suivantes, **caractérisé en ce que** le dispositif de couplage bidirectionnel (12) comprend un dispositif d'électronique de puissance, en particulier un convertisseur de tension continue.

6. Dispositif selon la revendication 1 ou l'une des suivantes, **caractérisé en ce que** le dispositif de stockage d'énergie (9) présente un dispositif de stockage d'énergie électrochimique et/ou mécanique et/ou électrostatique.

7. Dispositif selon la revendication 1 ou l'une des suivantes, **caractérisé en ce que** le premier onduleur (6) est configuré pour acheminer, par l'intermédiaire d'une première ligne d'alimentation vers ou depuis le réseau d'alimentation (5), un courant injecté par la sous-station (1, 1', 100, 100') dans le réseau d'alimentation (5) et/ou prélevé sur celui-ci, et **en ce qu'**une première ligne électrique du réseau de service (2) est raccordée au réseau d'alimentation de telle sorte qu'elle forme une ligne pour le courant vers et/ou depuis la sous-station.

8. Dispositif selon la revendication 1 ou l'une des suivantes, **caractérisé en ce que** le premier onduleur (6) est configuré pour acheminer, par l'intermédiaire d'une première ligne d'alimentation vers et/ou depuis le réseau d'alimentation (5), un courant injecté par la sous-station (1, 1', 100, 100') dans le réseau d'alimentation (5) et/ou prélevé sur celui-ci, et **en ce qu'**une puissance peut être prélevée sur le dispositif de stockage d'énergie (9) afin d'être injectée dans le réseau d'alimentation, ou une puissance prélevée sur le réseau d'alimentation peut être transférée au dispositif de stockage d'énergie.

9. Dispositif selon la revendication 1 ou l'une des suivantes, **caractérisé en ce que** le dispositif de commande (19) de la sous-station est raccordé à au moins un dispositif de capteur (20, 21) qui détecte la tension et/ou la fréquence et/ou la position de phase du réseau d'alimentation (5).

10. Dispositif selon la revendication 1 ou l'une des suivantes, **caractérisé en ce que** le rapport du contenu énergétique du dispositif de stockage d'énergie (9) à la puissance de raccordement de la sous-station (1, 1', 100, 100') est d'au moins 1h/5.

11. Dispositif selon la revendication 1 ou l'une des suivantes, **caractérisé en ce que** la capacité maximale du dispositif de stockage d'énergie (9) est dimensionnée de manière à ce qu'au moins deux fois la quantité d'énergie fournie en moyenne par heure aux utilisateurs supplémentaires puisse être stockée.

12. Dispositif selon la revendication 1 ou l'une des suivantes, **caractérisé en ce que** le dispositif de commande (19) de la sous-station (1, 1', 100, 100') est raccordé à au moins un dispositif de capteur qui détecte au moins un état de fonctionnement du réseau d'alimentation (5).

13. Dispositif selon la revendication 1 ou l'une des suivantes, **caractérisé en ce que** la sous-station (1, 1', 100, 100') présente un dispositif qui est raccordé au circuit de tension continue (8) et qui est formé pour alimenter en énergie les utilisateurs basse tension de la sous-station (1,1', 100, 100').
